# EUROPÄISCHE PATENTSCHRIFT

(11) **EP 2 889 224 B1**
(45) Veröffentlichungstag und Bekanntmachung des Hinweises auf die Patenterteilung: **24.02.2016**
(21) Anmeldenummer: 13199515.1
(22) Anmeldetag: 24.12.2013
(51) Int. Cl.: B65B 29/02, B65B 7/28, B65D 85/804

(54) **Portionenkapsel zum Zubereiten eines Brüherzeugnisses und Verfahren zu deren Herstellung**
Portion capsule for preparing a brewed product and method for producing the same
Capsule portion pour la préparation d'un produit ébouillanté et son procédé de fabrication

(43) Veröffentlichungstag der Anmeldung: 01.07.2015
(73) Patentinhaber: Qbo Coffee GmbH, 8304 Wallisellen (CH)
(72) Erfinder: Deuber, Louis, 8805 Richterswil (CH); Rupfle, Roland, 6912 Hörbranz (AT); Ternité, Rüdiger, 21149 Hamburg (DE); Stein, Robert, 24576 Weddelbrook (DE)
(74) Vertreter: Frei Patent Attorneys

(56) Entgegenhaltungen:
- EP-A1- 2 465 793
- WO-A1-2010/118543
- US-A1- 2009 007 793

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere insbesondere ein Verfahren zum Herstellen einer mit einem Extraktionsgut gefüllten Kapsel sowie eine mit diesem Verfahren hergestellte Kapsel.

Extraktionsgeräte zum Zubereiten von Getränken aus einem in einer Portionsverpackung vorhandenen Extraktionsgut sind beispielsweise als Kaffee-, Espresso- oder auch Teemaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein erheblicher Druck von beispielsweise 5-20 bar - für Filterkaffee oder Tee auch weniger - herrschen.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz.

Aus der WO 2010/118543 ist eine Kaffee-Portionenkapsel bekannt, welche näherungsweise eine Würfelform aufweist und im Unterschied zu den bekannten becherförmigen Kapseln keinen auf der Ebene der einen (oberseitigen) Deckfläche umlaufenden Kragen aufweist. Ein solcher umlaufender Kragen wird bei Kapselsystemen gemäss dem Stand der Technik unter anderem zum Verschliessen der Kapsel durch einen flachen Deckel (der typischerweise als Membran oder Folie ausgebildet ist) benötigt. Beim Verschliessen mittels Ultraschallschweissen braucht es den Kragen, um einen Energierichtungsgeber unterzubringen. Wird die Kapsel durch thennisches Versiegeln verschlossen, ist der Kragen nötig, damit der Deckel auf einer genügend grossen Fläche aufliegt. Im Gegensatz dazu wird gemäss WO 2010/118543 ein gewölbter Deckel verwendet, und das Verschliessen erfolgt bspw. mittels Ultraschall-Trennschweissen. Die gemäss der Lehre der WO 2010/118543 hergestellte Kapsel hat demnach unabhängig von ihrer ("Würfel"-)Form eine zwischen den durch die Deckfläche definierten Ebenen umlaufende, einen nur minimalen Kragen bildende Schweissbraue, deren Ausdehnung/seitliches Vorstehen jedoch im Vergleich zum Kragen bekannter Kapseln deutlich reduziert ist.

Die Kapsel gemäss WO 2010/118543 weist wichtige Vorteile auf, die in dieser Schrift auch beschrieben sind. Es ist jedoch eine Herausforderung, unter Berücksichtigung von Beschränkungen in der Dimensionierung der umlaufenden Schweissbraue den Deckel sicher am Grundkörper zu befestigen. Für den Fall eines Verschliessens mittels Ultraschallschweissen besteht ausserdem die Herausforderung den Energierichtungsgeber auf dem in seiner Dimension nach der Fertigung deutlich beschränkten umlaufenden Kragen zu positionieren, insbesondere wenn die Kapsel mit Tiefziehen hergestellt werden soll.

Der vorliegenden Erfindung stellt sich demnach die Aufgabe, ein Verfahren zum Herstellen von Kapseln der in WO 2010/118543 beschriebenen Art so weiterzuentwickeln, dass eine einfachere Herstellbarkeit und ein verlässliches und besonders druckresistentes Verschliessen der Kapsel ermöglicht wird.

Gemäss einem Aspekt der Erfindung weist ein Verfahren zum Herstellen einer Kapsel die folgenden Schritte auf:
- Zur-Verfügung-stellen eines Grundkörpers aus einem Kunststoff, mit einem Bodenbereich, einer umlaufenden Seitenwand und einem an die umlaufende Seitenwand anschliessenden umlaufenden Grundkörper-Kragen, wobei der Grundkörper im Bereich des Kragens einen im Wesentlichen rechteckigen Querschnitt hat;
- Zur-Verfügung-stellen eines Deckels aus einem Kunststoff zum Verschliessen der Kapsel, d.h. zum Bilden einer geschlossenen Kapsel mit dem Grundkörper zusammen, wobei der Deckel anschliessend an einen umlaufenden Deckel-Kragen eine Wölbung nach aussen bildet, wobei der umlaufende Deckel-Kragen in seiner Dimensionierung auf den Grundkörper-Kragen abgestimmt ist;
- Befüllen des Grundkörpers mit einem Extraktionsgut; und
- Aufsetzen des Deckels auf den Grundkörper, so, dass der Deckel-Kragen auf dem Grundkörper-Kragen aufliegt und Befestigen des Deckel-Kragens am Grundkörper-Kragen mittels Ultraschallschweissen.

Das Verfahren zeichnet sich dadurch aus, dass der Deckel mit einem Energierichtungsgeber versehen ist, der während des Ultraschallschweissens die Ultraschallenergie fokussiert, dass der Deckel durch Tiefziehen hergestellt ist, und dass der Deckel mindestens eine im Bereich des Deckel-Kragens auf einer Aussenseite umlaufende Nut versehen ist.

Eine mit einem solchen Verfahren herstellbare Kapsel mit einem Extraktionsgut weist auf:
- Einen Grundkörper aus einem Kunststoff mit einem Bodenbereich und einer umlaufenden Seitenwand; und
- einen am Grundkörper befestigten Deckel aus einem Kunststoff;
- wobei der Deckel entlang eines umlaufenden Kragens am Grundkörper befestigt ist, wobei der Kragen durch Ultraschall-Verschweissen eines zur Deckelseite hin an die umlaufende Seitenwand anschliessenden Grundkörper-Kragens und eines Deckel-Kragens hergestellt ist;
- wobei der Grundkörper im Bereich des Kragens einen im Wesentlichen rechteckigen Querschnitt hat;
- wobei der Deckel eine Wölbung nach aussen bildet, so dass der Deckel zu einem Kapselvolumen beiträgt;
- und wobei ein Energierichtungsgeber in den Deckel-Kragen integriert ist, wobei der Deckel durch Tiefziehen hergestellt ist, und wobei der Deckel mindestens eine im Bereich des Deckel-Kragens auf einer Aussenseite umlaufende Nut versehen ist.

Energierichtungsgeber für Ultraschallschweissverfahren zum Verschliessen von Portionenkapseln sind längst bekannt und bspw. auch in der WO 2010/118543 beschrieben. In dieser Schrift wird jedoch gelehrt, den Richtungsgeber auf dem Kragen des Grundkörpers anzubringen. Dies war zum Zeitpunkt der Anmeldung die allgemein übliche Technologie für ultraschallverschweisste Portionenkapseln, und es herrschte die Überzeugung, dass es weder möglich noch vorteilhaft ist, einen Richtungsgeber stattdessen in den Deckel zu integrieren. Die vorliegende Erfindung schlägt nun erstmals vor, einen solchen Energierichtungsgeber am Deckel - der während des Ultraschallschweissverfahrens aufgrund der Befüllung des Grundkörpers immer oben angeordnet ist - und nicht am Grundkörper vorzusehen.

Dies bringt unter anderem folgende Vorteile:
Erstens hat sich gezeigt, dass sich ein Energierichtungsgeber am Deckel leichter herstellbar ist, insbesondere, wenn die Kapsel tiefgezogen ist. Es hat sich nämlich herausgestellt, dass es für das Tiefziehen eines Grundkörpers - zumal in der im Querschnitt rechteckigen Form - relativ herausfordernd ist, einen Energierichtungsgeber auf einem schmalen Kragen, nahe an der umlaufenden Seitenwand zu platzieren.

Mit dem vorgeschlagenen Vorgehen trägt die vorliegende Erfindung dazu bei, den Rand schmaler zu halten und damit bspw. die Stapelbarkeit und Kompaktheit der fertigen Kapsel zu verbessern.

Zweitens hat sich gezeigt, dass das Ultraschallschweissen mindestens bei Kapseln der hier beschriebenen Art besser funktioniert, wenn der Energierichtungsgeber auf Seite der Sonotrode liegt. Aufgrund der Befüllung des Grundkörpers ist es jedoch nicht möglich, eine Sonotrode von unten, also vom Grundköper her, angreifen zu lassen. Die vorliegende Erfindung schafft hier durch Vorsehen des Energierichtungsgebers am Deckel Abhilfe.

Die Form der Kapsel ist so, dass der Grundkörper im Bereich des Kragens im Querschnitt im Wesentlichen rechteckig, bspw. im Wesentlichen quadratisch ist.

Auch der Kragen selbst - bspw. dessen Aussenkante - kann im Wesentlichen rechteckig, insbesondere quadratisch sein. ,Im Wesentlichen rechteckig' bzw. ,im Wesentlichen quadratisch' schliesst insbesondere abgerundete Ecken nicht aus.

Die Kapsel kann als Ganze - bis auf den Kragen und einen eventuellen Versatz der Deckelwölbung, siehe unten - die Form eines Würfels oder Quaders, insbesondere eines Würfels haben. In Ausführungsformen kann der Kragen seitlich mindestens 0.8 mm, insbesondere mindestens 1 mm und und/oder maximal 2 mm, insbesondere maximal 1.5 mm hervorstehen. Ein Vorteil dieser Dimensionierung (Breite zwischen 0.8 mm und 2 mm) ist, dass man hier den besten Kompromiss aus Stapelbarkeit / Kompaktheit (kleine Umverpackung) und zuverlässiger Versiegelung erhält. Ausserdem hilft der schmale Rand beim Führen und halten in eine Brüheinheit in der korrekte Orientierung, ohne dabei die Nachteile der bekannten grossen Krägen (Aussenvolumen und entsprechende Platzbeanspruchung in Verpackung und Brühheinheit; Optik) in Kauf zu nehmen. Das gilt unabhängig von den Dimensionen der Kapsel als Ganzer, d.h. die Dimensionierung des Kragens wird in Ausführungsformen für kleinere Kapseln genauso im genannten Bereich gewählt wie für grössere Kapseln.

Die Würfelform schliesst eine - bspw. bei tiefgezogenen Kapseln herstellungsbedingte - Neigung der umlaufenden Seitenflächen zur Achse (Senkrechten auf die Boden- und/oder Deckelfläche) von bspw. maximal 3°, insbesondere maximal 2° oder maximal 1.5° nicht aus.

Bei einer Ausführung im Wesentlichen in Würfelform beträgt die äussere Länge der Würfelkanten beispielsweise zwischen 24 und 30 mm für eine Füllmenge von zwischen ca. 6 g und ca. 10 g Kaffee. Für grössere Füllmengen sind auch grössere Abmessungen, bspw. von bis zu 35 mm, nicht ausgeschlossen.

Der Grundkörper weist einen Bodenbereich und eine umlaufende Seitenwand auf und bildet so eine Art Becher, der durch den Deckel verschlossen wird. Dabei kann der Bodenbereich flach sein, das ist jedoch keine Notwendigkeit.

Die Form des Deckels kann von aussen nach innen den Deckel-Kragen, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Ebene des Deckel-Kragens nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Bodenfläche ist. Es kann insbesondere bei einer Ausführung der Kapsel als insgesamt quader- oder würfelförmig vorgesehen sein, dass dieser flache Bereich mehr als 60% des Durchmessers und entsprechend mindestens 40% der Fläche, einnimmt.

Der Deckel-Kragen wird im Allgemeinen eine umlaufende, zur Deckelseite hin gewandte Fläche bilden, die sich von einer Aussenkante des Kragens bis zu einem Ansatz der Wölbung erstreckt. Es kann in Ausführungsformen vorgesehen sein, dass der Ansatz der Wölbung im Vergleich zu der Partie der Seitenwand, an welche der Kragen anschliesst, nach innen versetzt ist. Ein solcher Versatz kann bspw. mindestens 0.2 mm betragen.

Sowohl der Grundkörper als auch der Deckel sind im Allgemeinen aus Kunststoff gefertigt. Es kann insbesondere vorgesehen sein, dass Grundkörper und Deckel aus demselben Kunststoff bestehen. Als Beispiel für ein Material sei Polypropylen genannt, wobei eine Sperrschicht eingearbeitet sein kann, die eine Barriereneigenschaft für Sauerstoff hat und eine Diffusion von Sauerstoff in die Kapsel verhindert. Eine solche Sperrschicht weist bspw. ein Ethylen-Vinylalkohol-Copolymer (EVOH) auf. Die Wandstärke im Bereich des Grundkörpers beträgt insbesondere 0.1 mm und 0.7 mm, vorzugsweise zwischen 0.2 mm und 0.4 mm, bspw. zwischen 0.25 mm und 0.35 mm. Dasselbe kann auch für die Wandstärke des Deckels gelten. In einer Ausführungsform entspricht die Wandstärke des Deckels ungefähr der Wandstärke des Grundkörpers.

Anstelle von Polypropylen kommen auch andere Kunststoffe in Frage. Auch die Anwendung der Erfindung auf ultraschallverschweissbare Nicht-Kunststoffe ist nicht ausgeschlossen.

Der Energierichtungsgeber kann wie an sich bekannt die Form einer Rippe haben, beispielsweise mit einem V-förmigen Profil. Eine solche Rippe kann parallel zum Kragenverlauf umlaufend angeordnet sein. Auch zwei oder mehr solcher Rippen können vorhanden sein; ein zum Kragen nicht-paralleler Verlauf ist - für eine oder mehrere Rippen - ebenfalls nicht ausgeschlossen. Auch andere Energierichtungsgeberformen sind denkbar, bspw. in der Form einer umlaufenden Anordnung von einzelnen hügelartigen Erhebungen etc.

Insbesondere wenn der Deckel durch Tiefziehen hergestellt ist (aufgrund von dessen beschränkter Tiefe kann das Tiefziehverfahren an diesem auch als Prägeverfahren aufgefasst werden), weist er im Bereich des Deckelkragens auf der Aussenseite, d.h. der vom Grundkörper abgewandten Seite, unter Umständen eine zum Energierichtungsgeber inverse Struktur auf, welche auch an der fertig hergestellten Kapsel noch sichtbar ist. Insbesondere kann eine solche Struktur die umlaufende Nut aufweisen. Diese Struktur entsteht bei der Herstellung des Deckels im Tiefziehverfahren (bzw. dem Prägeverfahren), durch das Einprägen des Energierichtungsgebers, und kann beim Verschweissen der Kapsel auch als Zentrierhilfe dienen. So kann z.B. eine zu der Nut komplementäre umlaufende Rippe an der Sonotrode vorgesehen sein, mit deren Hilfe der Deckel dann auf der Kapsel zentriert werden kann.

Auch der Grundkörper kann im Tiefziehverfahren oder alternativ durch Spritzgiessen hergestellt sein. Im Allgemeinen werden entweder Grundkörper und Deckel beide je tiefgezogen oder spritzgegossen sein, aber auch Kombinationen mit spritzgegossenem Grundkörper und tiefgezogenem Deckel und umgekehrt sind möglich.

Der Grundkörper-Kragen und/oder der Deckel-Kragen kann/können mit einem Übermass zur Verfügung gestellt werden. Anschliessend an das Verschweissen oder gleichzeitig mit dem Verschweissen werden die überstehenden Bereiche dann abgetrennt, bspw. durch Ultraschall oder durch Stanzen.

In Ausführungsformen kann der Deckel oder der Grundkörper, insbesondere aber der Deckel, mit einer Positionierungshilfe versehen sein. Eine solche kann insbesondere einen über die Ebene, in welcher der Grundkörper-Kragen und der Deckel-Kragen aneinander stossen, hinaus ragenden Vorsprung aufweisen. Gemäss einer ersten Ausführungsform wird eine Positionierungshilfe durch eine Schulter in einem Bereich des Deckel-Kragens oder des Grundkörper-Kragens gebildet, wobei der Bereich mit der Schulter anschliessend abgetrennt wird. Eine solche Schulter kann mit dem Grundkörper-Kragen bzw. dem Deckel-Kragen zusammenwirken, um den Deckel relativ zum Grundkörper auszurichten, wenn der Deckel platziert wird. Eine solche Schulter ist insbesondere bei Fertigung durch Tiefziehen günstig, da sie einfach herstellbar ist. Gemäss einer zweiten Ausführungsform kann eine Positionierungshilfe einen nach innen ragenden Positionierungsvorsprung aufweisen, der im Innern des Kapselvolumens angeordnet ist und ebenfalls den Deckel relativ zum Grundkörper ausrichtet. Ein solcher Vorsprung kann insbesondere bei einer Fertigung durch Spritzgiessen angebracht werden.

Eine solche Positionierungshilfe dient in Ausführungsformen nicht nur der Ausrichtung des Deckels relativ zum Grundkörper, sondern auch der besseren Stapelbarkeit einer Vielzahl von Deckeln nach deren Fertigung.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine Kapsel;
- Fig. 2 einen Grundkörper für die Herstellung einer Kapsel gemäss Fig. 1;
- Fig. 3 einen Deckel für die Herstellung der Kapsel;
- Fig. 4 den Deckel gemäss Fig. 3, angeschnitten gezeichnet;
- Fig. 5 und 6 je eine Schnittdarstellung eines Details der Kapsel gemäss Fig. 4 im Bereich des Kragens;
- Fig. 7 einen weiteren Deckel;
- Fig. 8 den Deckel gemäss Fig. 7, angeschnitten gezeichnet; und
- Fig. 9 eine Unteransicht des Deckels gemäss Fig. 7, ebenfalls angeschnitten dargestellt.

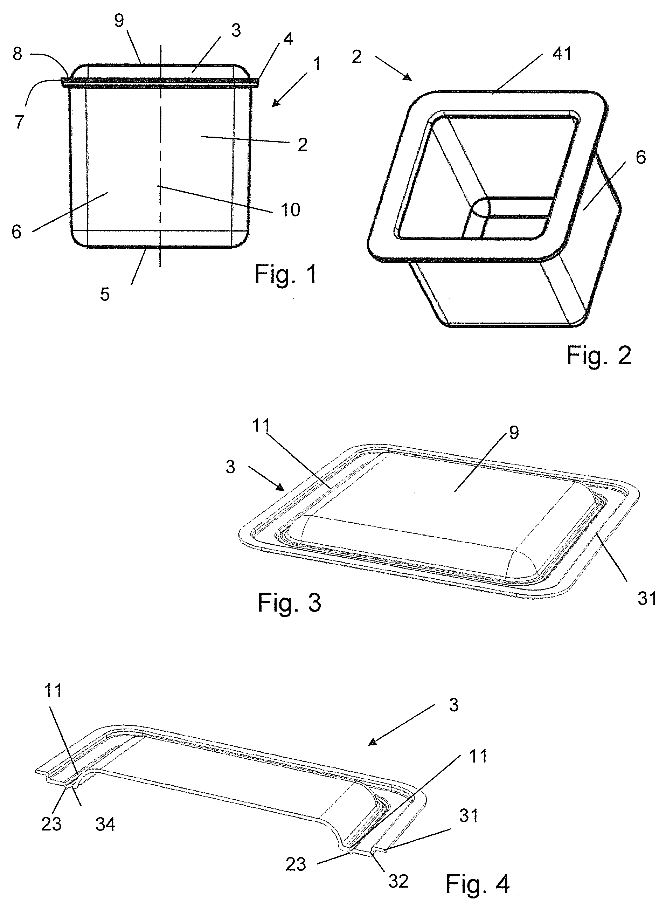

Die Kapsel 1 gemäss Figur 1 hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat. Der Neigungswinkel der in der Figur seitlichen Flächen gegenüber der Senkrechten zur Grundfläche 5 - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel weist einen Grundkörper (oder Becher) 2 und einen entlang eines umlaufenden Kragens 4 daran befestigten Deckel 3 auf. Der Grundkörper bildet einen Kapselboden 5 und eine umlaufende Seitenwand 6, welche an ihrem in Bezug auf axiale Richtungen (Achse 10) äusseren, in der Figur oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen versetzt ist.

**Figur 2** zeigt den Grundkörper 2 (Becher) vor der Befüllung und vor dem Verschliessen. Der Grundkörper-Kragen 41 weist eine Ausdehnung auf, welche grösser ist als diejenige des Kragens 4 der fertigen Kapsel.

Bei der Kapselherstellung wird zunächst der Grundkörper 2 mit dem Extraktionsgut befüllt, und anschliessend wird der Deckel 3 positioniert. **Figuren 3 und 4** zeigen ein Ausführungsbeispiel eines Deckels 3, der durch Tiefziehen hergestellt ist. Der im Bereich des Deckel-Kragens 34 ausgeformte Energierichtungsgeber 23 hat die Form einer umlaufenden Rippe, die im Querschnitt ungefähr V-förmig ist. Auf der Rückseite (nach der Kapselherstellung als auf der Aussenseite) bildet sich dementsprechend eine umlaufende Nut 11.

Der Deckel weist einen seitlichen Überstand 31 auf, der bei oder nach der Befestigung am Grundkörper abgetrennt wird. Am Überstand ist ein abgesetzter Bereich vorhanden, so dass eine Schulter 32 gebildet wird. Der Deckel ist so dimensioniert, dass der Grundkörper-Kragen 41 bis zu dieser Schulter reicht, wenn der Deckel auf dem Grundkörper positioniert wird, so dass die Schulter als Hilfe bei der Positionierung relativ zum Grundkörper dient.

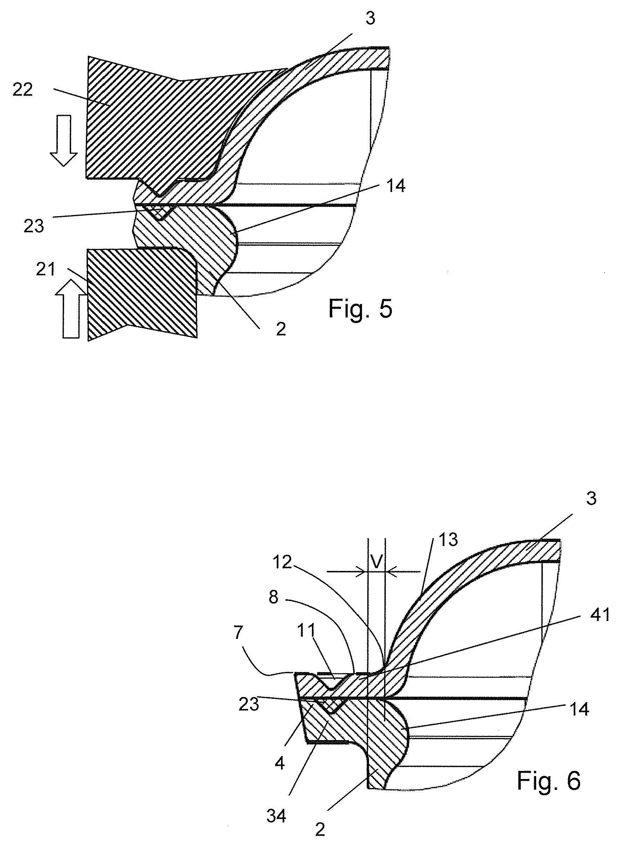

Beim Verschliessen der Kapsel wird, wie in **Figur 5** sehr schematisch dargestellt, der Grundkörper-Kragen von unten durch ein erstes Werkzeug 21 (Amboss) abgestützt, während der Deckel platziert ist, und von oben koppelt ein zweites Werkzeug 22 (Sonotrode) Ultraschallenergie in den Deckelkragen ein, so dass ein Verschweissen stattfindet. **Figur 6** illustriert die Stelle der Verschweissung nach dem Abtrennen des eventuellen Überstandes. Der mit Kreuzschraffur dargestellte Bereich illustriert die ursprüngliche Position des Energierichtungsgebers 23; in Realität sind nach dem Verschliessen der Grundköperkragen und der Deckelkragen auch neben diesem Bereich miteinander verschweisst.

Der umlaufende Kragen bildet eine zu Deckelseite hin gewandte Fläche 8, die sich von der Aussekante 7 des Kragens bis zum Ansatz 12 der Wölbung erstreckt. Wie man in Figur 6 sieht, kann der Ansatz 12 gegenüber der vom Grundkörper 2 gebildeten umlaufenden Seitenwand nach innen versetzt sein. Ein solcher Versatz v kann dabei im Vergleich zur Dicke der Kapselwand relevant sein; er beträgt insbesondere mindestens 0.2 mm. Der Versatz v wird wie in Figur 6 illustriert gemessen zwischen den zur Aussenfläche des Grundkörpers im Bereich des Kragens 4 parallelen Ebenen, die durch den Ort maximaler konkaver Krümmung im Übergang zwischen der deckelseitigen Fläche 8 bzw. der grundkörperseitigen Oberfläche 18 des Kragens 4 und der Wölbung des Deckels bzw. der Aussenfläche des Grundkörpers gehen.

Der Deckel 8 bildet zwischen dem Kragenbereich und der eigentlichen Deckfläche 9 einen Übergangsbereich 13, in welchem die Wand eine Krümmung aufweist und so die Wölbung bildet. Im gezeichneten Beispiel geht dieser ausgehend von einer Partie, die einem fast rechten Winkel zur Kragenebene und der Deckfläche 9 steht, in stetiger konvexer Krümmung in den flachen, die Deckfläche bildenden Bereich über. Am Ansatz 12 ist daher die konkave Krümmung gross (d.h. der Krümmungsradius) klein. Es wäre aber auch denkbar, die konkave und die konvexe Krümmung einander mehr anzugleichen, wodurch dann ein im Querschnitt S-förmiger Verlauf resultieren würde. Durch die flächenmässige Beschränkung des Übergangsbereichs ist gewährleistet, dass der mittige flache Bereich einen Grossteil der Deckelfläche (mindestens 40%) ausmacht und daher die Würfel- oder Quaderform als Ganze nicht beeinträchtigt ist.

Ebenfalls in Figur 6 sichtbar ist eine optionale Verdickung 14 im Übergang zwischen der umlaufenden Seitenwand und dem Kragen. Eine solche Verdickung dient der zusätzlichen Versteifung.

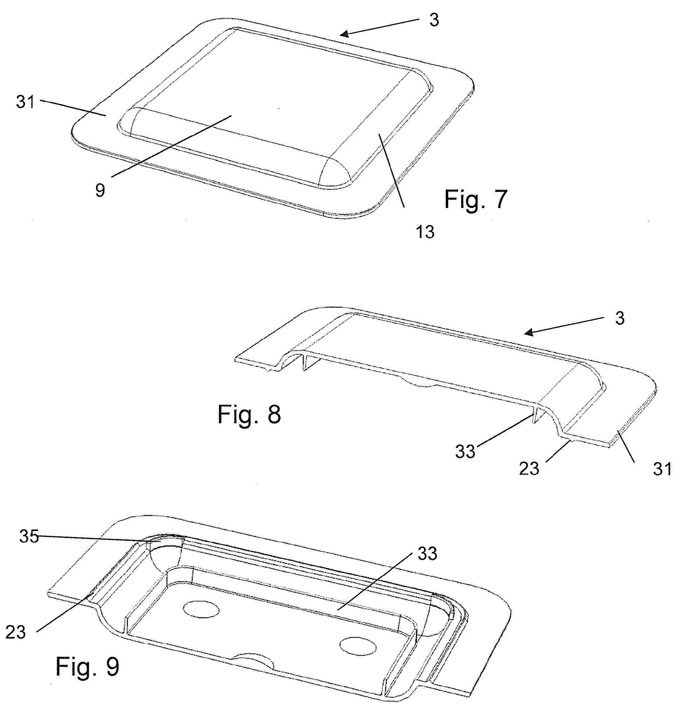

**Figuren 7-9** zeigen einen nicht durch Tiefziehen, sondern durch Spritzgiessen hergestellten Deckel 3. Zusätzlich zum Energierichtungsgeber 23 ist ein innenseitig nach innen ragender Steg 33 angeformt. Dieser dient der mechanischen Versteifung und als Stapelhilfe. Als Positionierungshilfe wirken im Bereich der Ecken angeformte Positionierungsvorsprünge 35.

## Patentansprüche

1. Verfahren zum Herstellen einer mit einem Extraktionsgut gefüllten Portionenkapsel (1) für die Herstellung eines Brüherzeugnisses, aufweisend die folgenden Schritte:
- Zur-Verfügung-stellen eines Grundkörpers (2) aus einem Kunststoff, mit einem Bodenbereich (5), einer umlaufenden Seitenwand (6) und einem an die umlaufende Seitenwand anschliessenden umlaufenden Grundkörper-Kragen (41), wobei der Grundkörper im Bereich des Grundkörper-Kragens einen im Wesentlichen rechteckigen Querschnitt hat;
- Zur-Verfügung-stellen eines Deckels (3) aus einem Kunststoff, wobei der Deckel anschliessend an einen umlaufenden Deckel-Kragen (34) eine Wölbung nach aussen bildet, wobei der umlaufende Deckel-Kragen in seiner Dimensionierung auf den Grundkörper-Kragen (41) abgestimmt ist;
- Befüllen des Grundkörpers (2) mit einem Extraktionsgut;
- Aufsetzen des Deckels (3) auf den Grundkörper (2), so, dass der Deckel-Kragen auf dem Grundkörper-Kragen aufliegt und Befestigen des Deckel-Kragens am Grundkörper-Kragen mittels Ultraschallschweissen, **dadurch gekennzeichnet,**
- **dass** mindestens der Deckel (3) durch Tiefziehen hergestellt ist, dass der Deckel mindestens eine im Bereich des Deckel-Kragens auf einer Aussenseite umlaufende Nut (11) versehen ist, und dass der Deckel (3) mit einem Energierichtungsgeber (23) versehen ist, der während des Ultraschallschweissens die Ultraschallenergie fokussiert.

2. Verfahren nach Anspruch 1, wobei der Deckel (3) und der Grundkörper (2) aus einem selben Kunststoff, gefertigt sind.

3. Verfahren nach einem der vorangehenden Ansprüche, wobei der Energierichtungsgeber (23) die Form einer umlaufenden Rippe hat.

4. Verfahren nach einem der vorangehenden Ansprüche, wobei mindestens der Deckel (3) mit einem Übermass hergestellt und anschliessend an das Verschweissen oder gleichzeitig mit diesem überstehende Bereiche (31) abgetrennt werden.

5. Verfahren nach einem der vorangehenden Ansprüche, wobei der Deckel (3) mit einer Positionierungshilfe (32, 35) versehen ist, durch welche der Deckel (3) beim Aufsetzen relativ zum Grundkörper (2) ausgerichtet wird.

6. Mit einem Extraktionsgut gefüllte Portionenkapsel (1) für die Herstellung eines Brüherzeugnisses, insbesondere herstellbar mit einem Verfahren nach einem der vorangehenden Ansprüche, aufweisend:
- einen Grundkörper (2) aus einem Kunststoff, mit einem Bodenbereich (5) und einer umlaufenden Seitenwand (6) und einem an die umlaufende Seitenwand anschliessenden umlaufenden Grundkörper-Kragen (41), wobei der Grundkörper im Bereich des Grundkörper-Kragens einen im Wesentlichen rechteckigen Querschnitt hat;
- einen Deckel (3) aus einem Kunststoff, welcher entlang eines umlaufenden Kragens am Grundkörper befestigt ist,
- wobei der Kragen durch Ultraschall-Verschweissen des Grundkörper-Kragens (41) und eines Deckel-Kragens (34) hergestellt ist
- wobei der Deckel eine Wölbung nach aussen bildet, so dass der Deckel zu einem Kapselvolumen beiträgt, **dadurch gekennzeichnet,**
- **dass** der Deckel (3) durch Tiefziehen hergestellt ist, dass der Deckel mindestens eine im Bereich des Deckel-Kragens auf einer Aussenseite umlaufende Nut (11) versehen ist, und dass ein Energierichtungsgeber (23) in den Deckel-Kragen (34) integriert ist.

7. Kapsel nach Anspruch 6, die bis auf den Kragen (4) im Wesentlichen würfel-oder quaderförmig ist.

8. Kapsel nach einem der Ansprüche 6 oder 7, wobei ein Ansatz (12) der Wölbung im Vergleich zu der Partie der Seitenwand (6), an welche der Kragen (4) anschliesst, nach innen versetzt ist.

9. Kapsel nach einem der Ansprüche 6 bis 8, wobei der Deckel von aussen nach innen einen Kragenbereich, der eine zur Deckelseite hin gewandte Fläche (8) bildet, einen gekrümmten Übergangsbereich und einen von einer Ebene der Fläche (8) abgesetzten flachen Bereich (9) aufweist.

10. Kapsel nach Anspruch 9, wobei der flache Bereich (9) mindestens 40% einer Deckelfläche einnimmt.

11. Kapsel nach einem der Ansprüche 6 bis 10, wobei der Kragen (4) seitlich zwischen 0.8 mm und 2 mm vorsteht.

12. Kapsel nach einem der Ansprüche 6 bis 11, wobei der Grundkörper (2) und der Deckel (3) aus einem selben Kunststoff gefertigt sind.

## Claims

1. A method for manufacturing a portion capsule (1) which is filled with an extraction material and which is for creating a brewed product, comprising the following steps:
- providing a main body (2) of a plastic, with a bottom region (5), with a peripheral side wall (6) and with a peripheral main-body collar (41) connecting to the peripheral side wall, wherein the main body has an essentially rectangular cross section in the region of the main-body collar;
- providing a cover (3) of a plastic, wherein the cover, connecting to a peripheral cover collar (34), forms an outward arching, wherein the peripheral cover collar in its dimensioning is matched to the main-body collar (41);
- filling the main body (2) with an extraction material; and
- placing the cover (3) onto the main body (2), such that the cover collar lies on the main-body collar, and fastening the cover collar on the main-body collar by way of ultrasound welding, **characterised in that**
- at least the cover (3) is manufactured by deep-drawing, that the cover is provided with at least one groove (11) which is peripheral on an outer side, in the region of the cover collar, and that the cover (3) is provided with a energy director (23) which focuses the ultrasound energy during the ultrasound welding.

2. The method according to claim 1, wherein the cover (3) and the main body (2) are manufactured of a same plastic.

3. The method according to any one of the preceding claims, wherein the energy director (23) has the shape of a peripheral rib.

4. The method according to any one of the preceding claims, wherein at least the cover (3) is manufactured with an oversize, and protruding regions (31) are separated away subsequent to the welding or simultaneously with this.

5. The method according to any one of the preceding claims, wherein the cover (3) is provided with a positioning aid (32, 35), by way of which the cover (3) is aligned relative to the main body (23) on placing on.

6. A portion capsule (1) which is filled with an extraction material and is for creating a brewed product, the portion capsule (1) in particular beeing manufacturable with a method according to one of the preceding claims, comprising
- a main body (2) of a plastic, with a bottom region (5) and with a peripheral side wall (6) and with a peripheral main-body collar (41) which connects to the peripheral side wall, wherein the main body in the region of the main-body collar has an essentially rectangular cross section;
- a cover (3) of a plastic which is fastened on the main body along a peripheral collar,
- wherein the collar is manufactured by way of the ultrasound welding of the main-body collar (41) and of a cover collar (34);
- wherein the cover forms an outward arching, so that the cover contributes to a capsule volume, **characterised in that,**
- the cover (3) is manufactured by deep-drawing, that the cover is provided with at least one groove (11) which is peripheral on an outer side, in the region of the cover collar, and that an energy director (23) is integrated into the cover collar (34).

7. The portion capsule according to claim 6, which, with the exception of the collar (4) is essentially cube-shaped or cuboid.

8. The portion capsule according to one of the claims 6 or 7, wherein a base (12) of the arching is offset inwards in comparison to the portion of the side wall (6), onto which portion the collar (4) connects.

9. The portion capsule according to one of the claims 6 to 8, wherein the cover, from the outside to the inside, comprises a collar region, an arcuate transition region and a flat region (9), said collar region forming a surface (8) facing towards the cover side, and said flat region (9) being set away from a plane of the surface (8).

10. The portion capsule according to claim 9, wherein the flat region (9) assumes at least 40% of a cover surface.

11. The portion capsule according to one of the claims 6 to 10, wherein the collar (4) projects laterally between 0.8 mm and 2 mm.

12. The portion capsule according to one of the preceding claims 6 to 11, wherein the main body (2) and the cover (3) are manufactured from a same plastic.

## Revendications

1. Procédé de fabrication d'une capsule de portion (1) remplie d'un produit d'extraction en vue de la préparation d'un extrait, le procédé présentant les étapes suivantes :
préparation d'un corps de base (2) en matière synthétique, présentant une partie de fond (5), une paroi latérale périphérique (6) et un collet périphérique (41) de corps de base qui se raccorde à la paroi latérale périphérique, le corps de base présentant une section transversale essentiellement rectangulaire au niveau du collet du corps de base,
préparation d'un couvercle (3) en matière synthétique, le couvercle formant ensuite sur un collet périphérique (34) de couvercle un bombement vers l'extérieur, le collet périphérique de couvercle ayant des dimensions accordées à celles du collet (41) du corps de base,
remplissage du corps de base (2) par un produit d'extraction,
placement du couvercle (3) sur le corps de base (2) de telle sorte que le collet de couvercle repose sur le collet de corps de base et fixation du collet de couvercle sur le collet de corps de base par soudage aux ultrasons,
**caractérisé en ce que**
au moins le couvercle (3) est formé par emboutissage,
**en ce que** le couvercle est doté d'une rainure périphérique (11) sur un côté extérieur de la partie formant le collet du couvercle et
**en ce que** le couvercle (3) est doté d'un orienteur d'énergie (23) qui concentre l'énergie des ultrasons pendant le soudage aux ultrasons.

2. Procédé selon la revendication 1, dans lequel le couvercle (3) et le corps de base (2) sont réalisés en la même matière synthétique.

3. Procédé selon l'une des revendications précédentes, dans lequel l'orienteur d'énergie (23) présente la forme d'une nervure périphérique.

4. Procédé selon l'une des revendications précédentes, dans lequel au moins le couvercle (3) est surdimensionné et en ce qu'ensuite, les parties en débord (31) sont découpées après le soudage ou pendant ce dernier.

5. Procédé selon l'une des revendications précédentes, dans lequel le couvercle (3) est doté d'un accessoire de positionnement (32, 35) par lequel le couvercle (3) est aligné par rapport au corps de base (2) lors de sa pose.

6. Capsule (1) remplie d'un produit d'extraction en vue de la préparation d'un extrait, en particulier apte à être fabriquée en recourant à un procédé selon l'une des revendications précédentes et présentant :
un corps de base (2) en matière synthétique, présentant une partie de fond (5), une paroi latérale périphérique (6) et un collet périphérique (41) de corps de base qui se raccorde à la paroi latérale périphérique, le corps de base présentant une section transversale essentiellement rectangulaire au niveau du collet du corps de base,
un couvercle (3) en matière synthétique fixé sur le corps de base le long d'un collet périphérique,
le collet étant formé par soudage aux ultrasons du collet (41) du corps de base et d'un collet (34) de couvercle,
le couvercle formant un bombement vers l'extérieur, de telle sorte que le couvercle contribue à former un volume de la capsule,
**caractérisé en ce que**
le couvercle (3) est formé par emboutissage,
**en ce que** le couvercle est doté d'au moins une rainure périphérique (11) sur le côté extérieur au niveau du collet du couvercle et
**en ce qu'**un orienteur d'énergie (23) est intégré dans le collet (34) du couvercle.

7. Capsule selon la revendication 6, essentiellement en forme de cube ou de parallélépipède rectangle à l'exception du collet (4).

8. Capsule selon l'une des revendications 6 ou 7, dans laquelle un appendice (12) du bombage est décalé vers l'intérieur par rapport à la partie de la paroi latérale (6) sur laquelle le collet (4) se raccorde.

9. Capsule selon l'une des revendications 6 à 8, dans laquelle le couvercle présente de l'extérieur à l'intérieur une partie en collet qui forme une surface (8) tournée en direction du côté du couvercle, une partie courbée de transition et une partie plate (9) décalée par rapport au plan de la surface (8).

10. Capsule selon la revendication 9, dans laquelle la partie plate (9) représente au moins 40 % de la surface du couvercle.

11. Capsule selon l'une des revendications 6 à 10, dans laquelle le collet (4) déborde latéralement sur une distance comprise entre 0,8 mm et 2 mm.

12. Capsule selon l'une des revendications 6 à 11, dans laquelle le corps de base (2) et le couvercle (3) sont réalisés dans la même matière synthétique.
